# EUROPEAN PATENT SPECIFICATION

(11) **EP 2 216 079 B1**
(45) Date of publication and mention of the grant of the patent: **27.06.2012**
(21) Application number: 09808107.8
(22) Date of filing: 17.03.2009
(51) Int. Cl.: A63F 13/10

(54) **GAME DEVICE, GAME DEVICE CONTROL METHOD, PROGRAM, AND INFORMATION STORAGE MEDIUM**
SPIELVORRICHTUNG, STEUERUNGSVERFAHREN FÜR DIE SPIELVORRICHTUNG, PROGRAMM UND INFORMATIONSSPEICHERMEDIUM
DISPOSITIF DE JEU, PROCÉDÉ DE COMMANDE DE DISPOSITIF DE JEU, PROGRAMME ET SUPPORT DE MÉMORISATION D'INFORMATIONS

(30) Priority: 20.08.2008 JP 2008211838
(43) Date of publication of application: 11.08.2010
(73) Proprietor: Konami Digital Entertainment Co., Ltd., Tokyo 107-8324 (JP)
(72) Inventor: IWAKIRI, Takeshi, Tokyo 107-8324 (JP)
(74) Representative: Müller-Boré & Partner Patentanwälte
(86) International application number: PCT/JP2009/055196
(87) International publication number: WO 2010/021171

(56) References cited:
- JP-A- 10 211 359
- JP-A- 2002 078 961
- JP-A- 2005 087 260
- US-A1- 2007 185 909

## Description

### TECHNICAL FIELD

The present invention relates to a game device for outputting speech, a game device control method, a program, and an information storage medium.

### BACKGROUND ART

There is known a game device for audio-outputting or display-outputting speech during a game. For example, there is known a game device which previously stores a plurality of kinds of speech and when a predetermined game situation occurs, outputs speech describing the game situation (Patent Document 1).
[Patent Document 1] JP 2007-215713 A

Document JP 2002078961 relates to a head position section acquires an area where a ball is located in a game space, and moves the head to the storage position of the file of actual condition comment data of the area in the CD-ROM. An actual condition comment determination section acquires conditions for actual conditions and determines the comment number of a comment to be outputted as an actual condition comment. An actual condition reproduction section sets the actual condition comment determined in a past log data and determines a chancel in which the actual condition comment determined is stored.

Document US 2007/0185909 A1 relates to a method in a computer system for authoring media content for a computer application. The authoring is accomplished by making use of a hierarchical structure including media objects, containers to group objects, and meta-containers to group containers and object, where the media objects are working copies of provided media files.

### DISCLOSURE OF THE INVENTION

### Problems to be Solved by the Invention

Incidentally, in an actual play-by-play sport broadcast, to describe even the same situation (first game situation), an announcer often changes their statement according to whether or not a certain situation (second game situation) related to the above-mentioned situation has occurred in the past. For example, in a play-by-play soccer broadcast, there is often a difference between a statement uttered in a case where a scoring event for a team X occurs for the first time and a statement uttered when the scoring event for the team X occurs for the second time. For example, there is often observed a scene in which the announcer says simply "Goal !!" when the scoring event for the team X occurs for the first time, while the announcer says. "Another Goal ! !" when the scoring event for the team X occurs for the second time.

In this respect, also in a game, if speech to be output in a case where the first game situation occurs can be changed according to whether or not the second game situation has occurred in the past, it becomes possible to improve its reality.

In order to change the speech to be output in the case where the first game situation occurs according to whether or not the second game situation has occurred in the past, it needs to be judged whether or not the second game situation has occurred in the past. As an example of a possible method for making such a judgment, there is a method of judging whether or not the second game situation has occurred in the past based on replay data for reproducing a past game situation.

However, in a case of employing this method, there is a need to store all of past game situations (for example, position data and performance data on a game character), which leads to a fear that a data amount may increase. Also in the case of employing this method, the past game situation needs to be referenced in order to judge whether or not the second game situation has occurred in the past, which leads to a fear that the processing may become complicated.

The present invention has been made in view of the above, and one of the objects of the present invention is to provide a game device, a game device control method, a program, and an information storage medium which make it possible to improve reality regarding outputting of speech relatively simply.

### Means for Salving Problems

In order to solve the above-mentioned problems, according to the present invention, there is provided a game device according to claim 1 including: speech data storage means for storing speech data; reference speech data storage means for storing reference speech data in association with the speech data; means for storing information indicating already-output speech data in storage means; and output control means for controlling outputting of the speech data based on a judgment result as to whether or not the reference speech data associated with the speech data has already been output.

Further, according to the present invention, there is provided a game device control method according to claim 7 including: a step of reading storage content of speech data storage means storing speech data; a step of reading storage content of reference speech data storage means storing reference speech data in association with the speech data; a step of storing information indicating already-output speech data in storage means; and an output control step of controlling outputting of the speech data based on a judgment result as to whether or not the reference speech data associated with the speech data has already been output.

Further, according to the present invention, there is provided a program according to claim 8 for causing a computer, such as a stationary game device (household game machine), a portable game machine, an arcade game machine, a cellular phone, a personal digital assistant (PDA), or a personal computer, to function as a game device. The program further causes the computer to function as: means for reading storage content of speech data storage means storing speech data; means for reading storage content of reference speech data storage means storing reference speech data in association with the speech data; means for storing information indicating already-output speech data in storage means; and output control means for controlling outputting of the speech data based on a judgment result as to whether or not the reference speech data associated with the speech data has already been output.

Further, according to the present invention, there is provided an information storage medium according to claim 9 having stored therein the above-mentioned program.

The present invention relates to a game device. According to the present invention, there are speech data storage means for storing speech data, and reference speech data storage means for storing reference speech data in association with the speech data. Further, information indicating already-output speech data is stored in storage means. Further, outputting of the speech data is controlled based on a judgment result as to whether or not the reference speech data associated with the speech data has already been output. According to the present invention, it becomes possible to improve reality regarding outputting of speech relatively simply.

Further, according to one aspect of the present invention, the speech data storage means may store first speech data and second speech data. The reference speech data storage means may store the reference speech data in association with the first speech data or the second speech data. The output control means may output the first speech data if a judgment result as to whether or not the reference speech data associated with the first speech data or the second speech data has already been output is a first judgment result, and may output the second speech data instead of the first speech data if the judgment result is a second judgment result.

Further, according to another aspect of the present invention, the speech data storage means may store first speech data and second speech data. The reference speech data storage means may store the reference speech data in association with the first speech data or the second speech data. The output control means may output the first speech data if a judgment result as to whether or not the reference speech data associated with the first speech data or the second speech data has already been output is a first judgment result, and may output the first speech data and the second speech data if the judgment result is a second judgment result.

Further, according to a further aspect of the present invention, the game device includes display control means for displaying a state of a game space on a game screen. The reference speech data storage means may include means for storing a reference region within the game space in association with the reference speech data and means for storing the reference region in association with the speech data. The output control means may control the outputting of the speech data based on a judgment result as to whether or not the reference speech data associated with the reference region associated with the speech data has already been output.

Further, according to a still further aspect of the present invention, the game device further includes condition storage means for storing a condition regarding an output count of the reference speech data. The output control means includes output count acquiring means for acquiring the output count of the reference speech data. In a case where the judgment result is a second judgment result that the reference speech data has already been output, if the output count acquired by the output count acquiring means satisfies the condition, the output control means may output the second speech data.

Further, according to a yet further aspect of the present invention, the game device further includes condition storage means for storing a condition regarding an output timing for the reference speech data and output timing storage means for causing the storage means to store therein the output timing for the reference speech data. In a case where the judgment result is the second judgment result that the reference speech data has already been output, if the output timing stored in the storage means satisfies the condition, the output control means may output the second speech data.

### BRIEF DESCRIPTION OF THE DRAWINGS

FIG. 1 is a diagram illustrating a configuration of a game device according to embodiments of the present invention.
FIG. 2 is a diagram illustrating an example of a three-dimensional game space.
FIG. 3 is a diagram for describing a pitch.
FIG. 4 is a diagram illustrating an example of a game screen.
FIG. 5 is a diagram illustrating functional blocks of the game device according to the embodiments of the present invention.
FIG. 6 is a diagram illustrating an example of a speech data table.
FIG. 7 is a diagram illustrating an example of a group table.
FIG. 8 is a diagram illustrating an example of storage contents of a main memory.
FIG. 9 is a flowchart of a processing executed by the game device according to the embodiment of the present invention.
FIG. 10 is a diagram illustrating an example of the speech data table.
FIG. 11 is a diagram illustrating an example of the speech data table.
FIG. 12 is a diagram illustrating an example of a first speech data table.
FIG. 13 is a diagram illustrating an example of a second speech data table.
FIG. 14 is a flowchart of a processing executed by the game device according to the embodiment of the present invention.
FIG. 15 is a diagram illustrating an example of the second speech data table.
FIG. 16 is a diagram illustrating an example of the first speech data table.
FIG. 17 is a diagram illustrating an example of the second speech data table.
FIG. 18 is a diagram illustrating an example of the first speech data table.
FIG. 19 is a diagram illustrating an example of the second speech data table.

### BEST MODES FOR CARRYING OUT THE INVENTION

### [First embodiment]

Hereinafter, detailed description is given of an example of a first embodiment of the present invention based on the drawings.

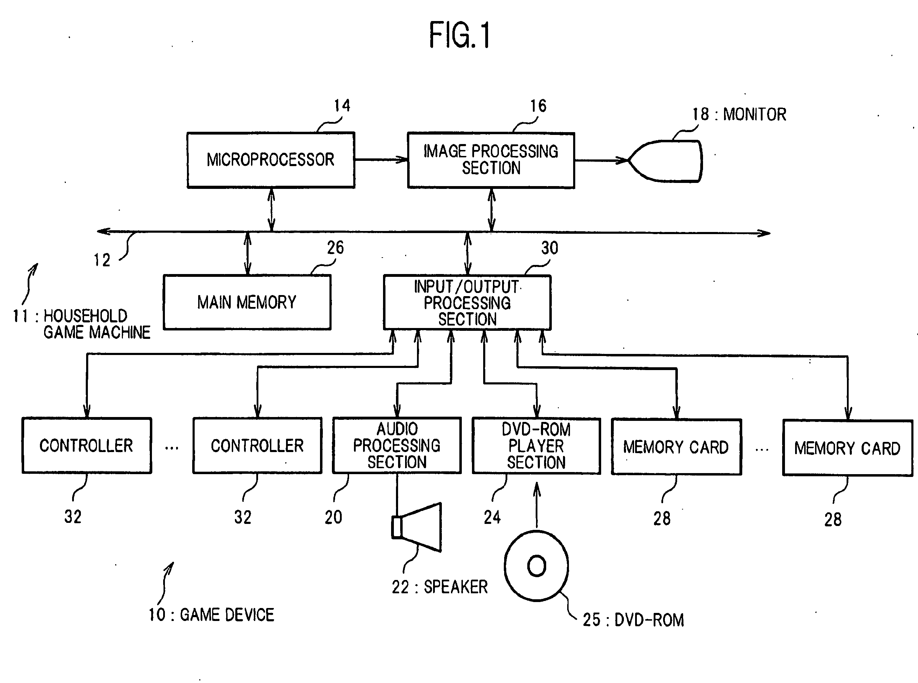

FIG. 1 is a diagram illustrating a configuration of a game device according to embodiments of the present invention. A game device 10 illustrated in the figure is structured by having a DVD-ROM 25 and a memory card 28, which serve as information storage media, attached to a household game machine 11 and by further having a monitor 18 and a speaker 22 connected thereto. For example, a household television set is used as the monitor 18, and an internal speaker thereof is used as the speaker 22.

The household game machine 11 is a known computer game system including a bus 12, a microprocessor 14, an image processing section 16, an audio processing section 20, a DVD-ROM player section 24, a main memory 26, an input/output processing section 30, and a controller 32. The components except the controller 32 are received in a casing.

The bus 12 is used for exchanging an address and data between the respective components of the household game machine 11. The microprocessor 14, the image processing section 16, the main memory 26, and the input/output processing section 30 are interconnected via the bus 12 so as to allow data communications therebetween.

The microprocessor 14 controls the respective components of the household game machine 11 based on an operating system stored in a ROM (not shown), a program read from the DVD-ROM 25, and data read from the memory card 28. The main memory 26 includes, for example, a RAM, and the program read from the DVD-ROM 25 and the data read from the memory card 28 are written to the main memory 26 as necessary. The main memory 26 is also used as a work memory for the microprocessor 14.

The image processing section 16 includes a VRAM, and renders a game screen in the VRAM based on image data sent from the microprocessor 14. Then, the image processing section 16 converts a content thereof into a video signal and outputs the video signal to the monitor 18 at a predetermined timing.

The input/output processing section 30 is an interface used for the microprocessor 14 to access the audio processing section 20, the DVD-ROM player section 24, the memory card 28, and the controller 32. Connected to the input/output processing section 30 are the audio processing section 20, the DVD-ROM player section 24, the memory card 28, and the controller 32.

The audio processing unit 20 includes a sound buffer, reproduces various types of audio data such as game music, game sound effects, and voice that are read from the DVD-ROM 25 and stored in the sound buffer, and outputs the reproduced audio data from the speaker 22.

The DVD-ROM player section 24 reads a program recorded on the DVD-ROM 25 according to an instruction from the microprocessor 14. Note that the DVD-ROM 25 is used here for supplying a program to the household game machine 11. However, any other information storage media such as a CD-ROM and a ROM card may also be used. Alternatively, the program may also be supplied to the household game machine 11 from a remote site via a data communication network such as the Internet.

The memory card 28 includes a nonvolatile memory (for example, EEPROM). The household game machine 11 includes a plurality of memory card slots for insertion of the memory cards 28 so that a plurality of memory cards 28 can be simultaneously inserted. The memory card 28 is structured to be capable of being inserted into and removed from the memory card slot, and is used for storing various,types of game data such as saved data.

The controller 32 is general-purpose operation input means used for a player to input various game operations. The input/output processing section 30 scans states of respective portions of the controller 32 every fixed period (for example, 1/60^{th} of a second), and passes operation signals representing results of the scanning to the microprocessor 14 via the bus 12. The microprocessor 14 judges a game operation performed by the player based on the operation signals. The household game machine 11 is structured to be connectable to a plurality of controllers 32, and the microprocessor 14 performs the game control based on the operation signals input from the respective controllers 32.

The game device 10 having the above-mentioned hardware structure and configuration provides a soccer game in which the game player operates a player object (object representing a soccer player) belonging to a team subjected to the game player's operation (hereinafter, referred to as "operation subject team") and aims at generating more scoring events than an opposing team. The soccer game is implemented by execution of a program for a soccer game read from the DVD-ROM 25.

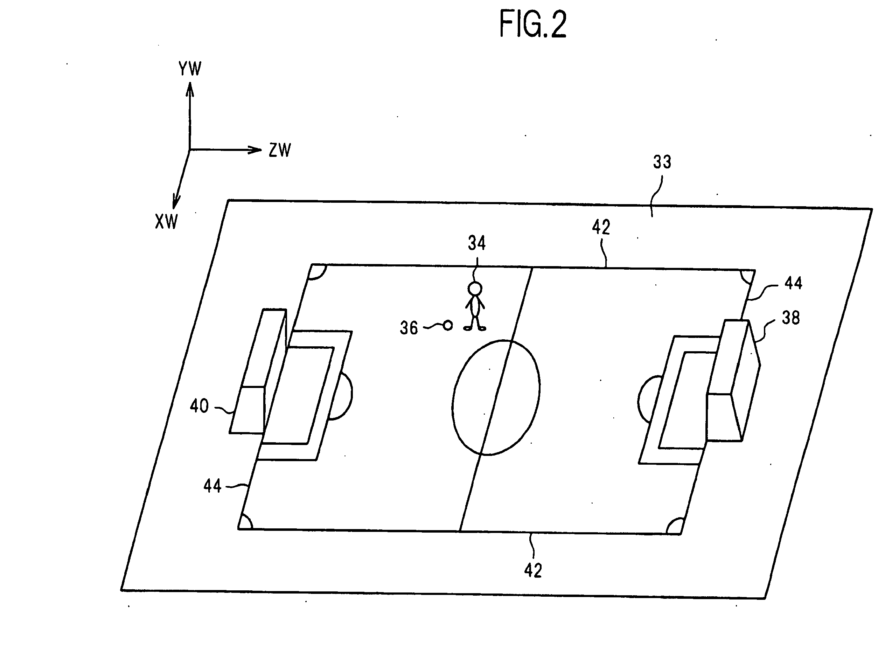

FIG. 2 is a diagram illustrating an example of a three-dimensional game space built in the main memory 26 in order to provide the above-mentioned soccer game. As illustrated in the figure, an XW-axis, a YW-axis, and a ZW-axis are set in the three-dimensional game space. In addition, a field object 33 indicating a soccer game field is located in the three-dimensional game space. Twenty-two player objects 34 and a ball object 36 representing a soccer ball are located on the field object 33. Here, only one player object 34 is illustrated. In addition, a goal object 38 of the opposing team and a goal object 40 of the operation subject team are located on the field object 33. When the ball object 36 moves to an inside of the goal object 38 of the opposing team, the scoring event for the operation subject team occurs. In addition, the field object 33 includes two side lines 42 and two goal lines 44. A region surrounded by the two side lines 42 and the two goal lines 44 is set as a pitch in which a competition is held.

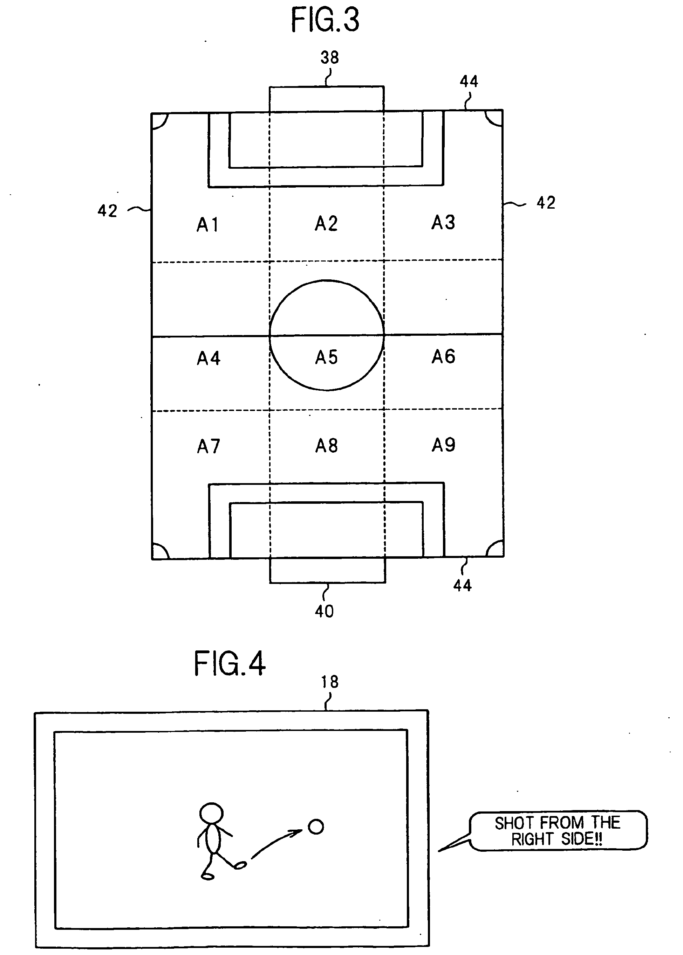

In this embodiment, the pitch is sectioned into a plurality of regions. FIG. 3 is a diagram illustrating how the pitch is sectioned into the plurality of regions. As illustrated in the figure, the pitch is sectioned into nine regions. Further, region names A1 to A9 are set for the respective regions. Note that hereinafter, the region A3 positioned on the right side of the goal object 38 of the opposing team is referred to as "right side region", and the region A1 positioned on the left side of the goal object 38 of the opposing team is referred to as "left side region".

In addition, a viewpoint is set for the three-dimensional game space. The microprocessor 14 (display control means) generates a game screen representing a state in which the three-dimensional game space is viewed from the viewpoint, and causes the monitor 18 to display the game screen thereon. FIG. 4 illustrates an example of the game screen displayed on the monitor 18.

In this soccer game, speech with which an announcer describes an actual scene of a match is output in an audio format during the soccer match (see FIG. 4). For example, in a case where the player object 34 of the operation subject team has made a shot in the right, side region, speech "Shot from the right side!!" is output. Alternatively, for example, in a case where the player object 34 of the operation subject team has moved to the left side region while keeping the ball object 36, speech "Attacking from the left side!! " is output. Note that hereinafter, the movement of the player object 34 while keeping the ball object 36 is referred to as "dribbling".

Further, in this soccer game, the outputting of speech is controlled according to whether or not speech related to the above-mentioned speech has already been output. Specifically, speech to be output changes according to whether or not speech related to the above-mentioned speech has already been output. This improves reality regarding the outputting of speech.

For example, in this soccer game, in a case where the player object 34 of the operation subject team is dribbling in the left side region, if the speech "Shot from the right side!!" output in the case where the player object 34 of the operation subject team has made a shot in the right side region has already been output, speech "And now, attacking from the left side!!" is output instead of the speech "Attacking from the left side!!". Therefore, the game player can be given an impression that the statement is being made as if the announcer bore in mind the fact that the operation subject team had made an attack from the right side region in the past.

Hereinafter, description is given of a technology for improving reality regarding the outputting of a speech.

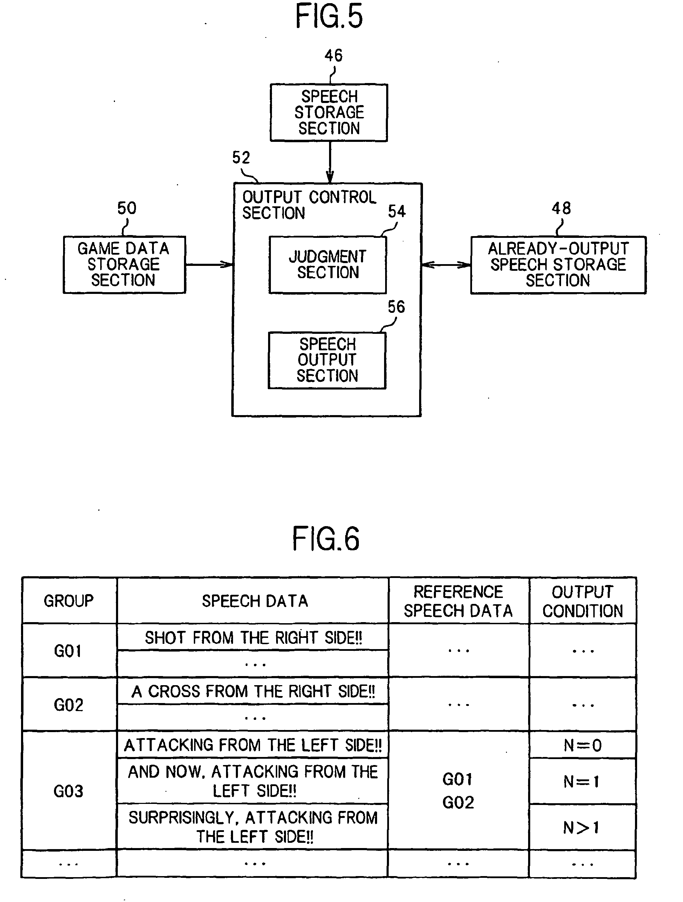

FIG. 5 is a functional block diagram mainly illustrating functions related to the present invention among the functions implemented by the game device 10. As illustrated in the figure, the game device 10 functionally includes a speech storage section 46, an already-output speech storage section 48, a game data storage section 50, and an output control section 52. The output control section 52 includes a judgment section 54 and a speech output section 56. Those functions are implemented by the microprocessor 14 executing the program read from the DVD-ROM 25.

### [Speech storage section]

The speech storage section 46 (speech data storage means, reference speech data storage means, and condition storage means) is implemented mainly by the DVD-ROM 25. FIG. 6 illustrates a speech data table stored in the speech storage section 46. The speech data table includes a group field, a speech data field, a reference speech data field, and an output condition field.

Stored in the speech data field is speech data for outputting speech to be uttered by the announcer. In this embodiment, the speech data is audio data. Also stored in the group field is identification information (here, group name) of a speech group to which the speech data belongs.

Further, stored in the reference speech data field is information for identifying reference speech data. The outputting of the speech data is controlled based on whether or not the reference speech data of the speech data has already been output. In this embodiment, in the reference speech data field, as the information for identifying the reference speech data, there is stored the group name of the speech group to which the above-mentioned reference speech data belongs. Therefore, each item of the speech data is associated with the speech data belonging to the speech group indicated in the reference speech data field as its corresponding reference speech data. Note that in the case of FIG. 6, the speech data belonging to the speech group "G03" is associated with the speech data belonging to the speech group "G01" and the speech data belonging to the speech group "G02" as the reference speech data.

Further, stored in the output condition field is an output condition for the speech data. For example, a condition regarding an output count N of the reference speech data is stored as the output condition in the output condition field. For example, in the case of FIG. 6, the condition regarding a total value N of the output counts of the speech data belonging to the speech group "G01" and the speech data belonging to the speech group "G02" is stored as the output condition for the speech data belonging to the speech group "G03" in the output condition field. According to FIG. 6, the output condition for the speech data "Attacking from the left side!!" is satisfied if the total value N is 0. That is, the output condition for the speech data "Attacking from the left side!!" is satisfied if neither the speech data belonging to the speech group "G01" nor the speech data belonging to the speech group "G02" has been output yet.

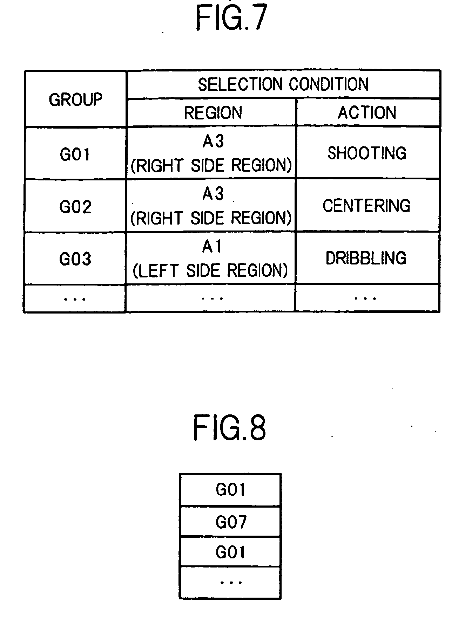

FIG. 7 illustrates a group table stored in the speech storage section 46. Stored in the group table in association with each speech group is a selection condition under which each speech group is selected by the judgment portion 54 described below. As illustrated in the figure, the selection condition is formed of an action type of the player object 34 of the operation subject team and a region name. The selection condition is satisfied if the player object 34 of the operation subject team performs an action that forms the selection condition in a region that forms the same selection condition. For example, the selection condition for the speech group "G01" is satisfied if the player object 34 of the operation subject team performs a shooting action in the right side region.

Note that as described above, each speech group is associated with the region name that forms the selection condition of each speech group (see FIG. 7). Therefore, each item of the speech data is associated with a region (reference region) that forms the selection condition for the speech group to which the corresponding reference speech data thereof belongs.

### [Already-output speech storage section]

The already-output speech storage section 48 (storage means) is implemented mainly by the main memory 26. The already-output speech storage section 48 stores information indicating already-output speech data. In this embodiment, the already-output speech storage section 48 stores a group name of the speech group to which the already-output speech data belongs. FIG. 8 illustrates storage contents of the already-output speech storage section 48.

### [Game data storage section]

The game data storage section 50 is implemented mainly by the main memory 26. The game data storage section 50 retains information indicating a situation of the three-dimensional game space. The game data storage section 50 stores, for example, a position of each player object 34, a posture of each player object 34, an action being performed by each player object 34, a position of the ball object 36, and a position of the viewpoint.

### [Output control section]

The output control section 52 is implemented mainly by the microprocessor 14 and the audio processing section 20. The output control section 52 uses functions of the judgment section 54 and the speech output section 56 to control outputting of speech data based on a judgment result as to whether or not the reference speech data of the speech data has already been output. Hereinafter, description is made of the judgment section 54 and the speech output section 56.

### [Judgment section]

The judgment section 54 judges whether or not the reference speech data associated with the speech data has already been output.

In this embodiment, the judgment section 54 references the game data storage section 50 to select one speech group X for which the selection condition is satisfied from among speech groups stored in the group field of the speech data table.

In addition, the judgment section 54 judges whether or not the output condition for each item of the speech data belonging to the speech group X is satisfied. Here, the judgment section 54 (output count acquiring means) acquires the total value N of the count for the number of times the respective items of the reference speech data of the speech data belonging to the speech group X have been output in the past based on the storage contents of the already-output speech storage section 48. Then, the judgment section 54 judges whether or not the output count N satisfies the output condition for each item of the speech data. For example, to judge whether or not the output condition for the speech data "Attacking from the left side! !" is satisfied, it is judged whether or not the total value N is 0.

### [Speech output section]

The speech output, section 56 outputs one item of the speech data belonging to the speech group X based on the judgment result from the judgment section 54. In this embodiment, the speech output section 56 outputs the speech data associated with the output condition satisfied by the output count N.

As a result, for example, according to FIG. 6, if the judgment section 54 obtains a judgment result A that the reference speech data (that is, speech data belonging to the speech group "G01" and speech data belonging to the speech group "G02") of the speech data belonging to the speech group "G03" has not yet been output, the speech output section 56 outputs the speech data "Attacking from the left side!!". Meanwhile, if the judgment section 54 obtains a judgment result B that the reference speech data of the speech data belonging to the speech group "G03" has already been output, the speech output section 56 outputs the speech data "And now, attacking from the left side!!" or speech data "Surprisingly, attacking from the left side!!" instead of outputting the speech data "Attacking from the left side!! ". That is, if the output count N of the reference speech data satisfies the output condition for the speech data "And now, attacking from the left side!! ", the speech data "And now, attacking from the left side!!" is output, and if the output count N satisfies the output condition for the speech data "Surprisingly, attacking from the left side!!", the speech data "Surprisingly, attacking from the left side!!" is output.

Note that if the judgment result A corresponds to a "first judgment result", the judgment result B corresponds to a "second judgment result", and if the judgment result A corresponds to the "second judgment result", the judgment result B corresponds to the "first judgment result". In addition, if the speech data "Attacking from the left side!! " corresponds to "first speech data", the speech data "And now, attacking from the left side!! " and the speech data "Surprisingly, attacking from the left side!! " correspond to "second speech data", and if the speech data "And now, attacking from the left side!! " and the speech data "Surprisingly, attacking from the left side!! " correspond to the "first speech data", the speech data "Attacking from the left side!! corresponds to the "second speech data".

Note that when outputting the speech data, the speech output section 56 also stores information indicating the speech data in the already-output speech storage section 48. For example, as the information indicating the speech data that has been output, the speech output section 56 stores the group name of the speech group X to which the speech data belongs in the already-output speech storage section 48.

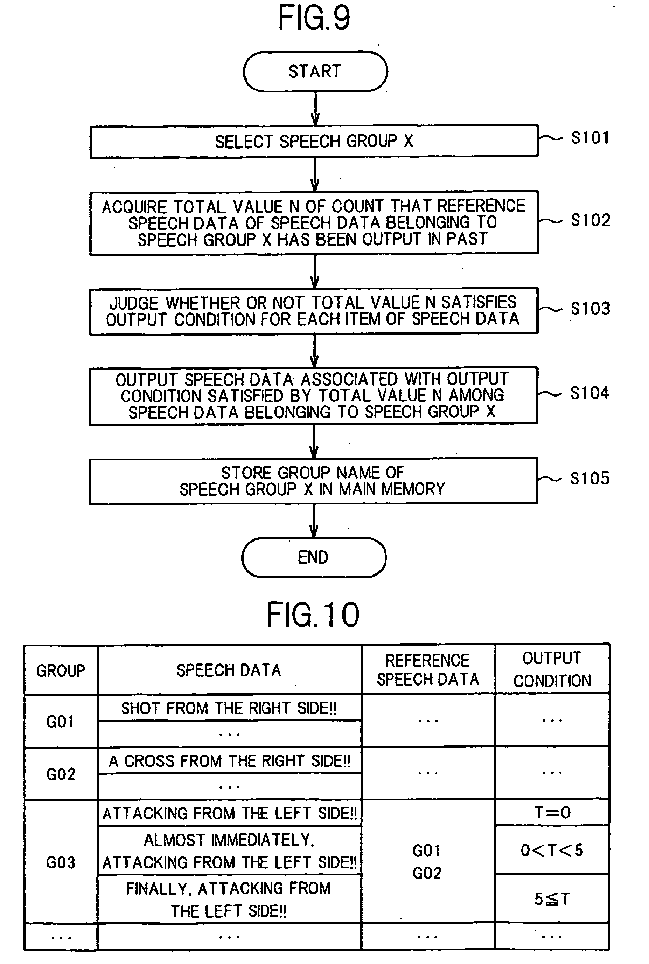

FIG. 9 is a flowchart mainly illustrating processing related to the present invention among the processing executed by the game device 10. The microprocessor 14 executes the processing illustrated in FIG. 9 according to the programs stored in the DVD-ROM 25.

The microprocessor 14 selects the one speech group X for which the selection condition is satisfied from among the speech groups (S101). Specifically, when the player object 34 of the operation subject team performs a certain action, the microprocessor 14 selects the speech group (that is, speech group X) associated with the type of action and a region in which the action is being performed by the player object 34 of the operation subject team.

Then, the microprocessor 14 judges in Steps S102 and S103 whether or not the output condition is satisfied for each item of the speech data belonging to the speech group X.

That is, based on the storage contents of the main memory 26, the microprocessor 14 (output count acquiring means) acquires the total value N of the count for the number of times that the reference speech data of the speech data belonging to the speech group X has been output in the past (S102).

Then, the microprocessor 14 judges whether or not the total value N satisfies the output condition for each item of the speech data (S103).

Then, the microprocessor 14 outputs the speech data associated with the output condition satisfied by the total value N among the speech data belonging to the speech group X (S104). Specifically, the microprocessor 14 causes the audio processing section 20 to output voice based on the speech data associated with the output condition satisfied by the total value N among the speech data belonging to the speech group X. As a result, for example, in a case where the speech group X is the speech group "G03", if neither the speech data of the speech group "G01" nor the speech data of the speech group "G02" has been output yet, the speech data "Attacking from the left side!!" is output from the speaker 22. Further, if the total value N of the output count of the number of times that the speech data of the speech group "G01" and the speech data of the speech group "G02" have been output in the past is 1, the speech data "And now, attacking from the left side!!" is output from the speaker 22. Alternatively, if the total value N of the output count for the number of times that the speech data of the speech group "G01" and the speech data of the speech group "G02" have been output in the past is equal to or larger than 2, the speech data "Surprisingly, attacking from the left side!!" is output from the speaker 22.

Then, the microprocessor 14 stores the group name of the speech group X selected in Step S101 in the main memory 26 (S105).

According to the game device 10, when the player object 34 of the operation subject team performs a dribbling action in the left side region, if the player object 34 of the operation subject team has not performed a shooting action or a centering (cross) action in the right side region in the past, the announcer states "Attacking from the left side!!", and if the player object 34 of the operation subject team has performed a shooting action or a centering action in the right side region in the past, the announcer states "And now, attacking from the left side!!" or "Surprisingly, attacking from the left side!!". Therefore, the game player can be given an impression that the statement is being made as if the announcer were bearing in mind the fact that the operation subject team had made an attack from the right side region in the past. As a result, the reality regarding the outputting of a speech is improved.

Further, on the game device 10, data necessary for the above-mentioned judgment is only the information (here, speech group to which the speech data belongs) indicating the speech data to be output in the case where the player object 34 of the operation subject team has performed a shooting action or a centering action in the right side region in the past, and hence a small amount of data suffices for the data to be stored. In addition, the processing required for the above-mentioned judgment becomes simple. Therefore, according to the game device 10, it is possible to realize improvement of the reality regarding the outputting of speech relatively simply.

Further, on the game device 10, in the case where the player object 34 of the operation subject team has performed a shooting action or a centering action in the right side region in the past, if the number of times that the player object 34 of the operation subject team has performed a shooting action or a centering action in the right side region in the past is small, the announcer states "And now, attacking from the left side!!", and if the number of times that the player object 34 of the operation subject team has performed a shooting action or a centering action in the right side region in the past is large, the announcer states "Surprisingly, attacking from the left side!!". Therefore, for example, the game player can also be given an impression that the statement is being made as if the announcer were bearing in mind the number of attacks made by the operation subject team from the right side region, and hence the reality regarding the outputting of speech is further improved.

Note that the output condition may be a condition regarding a past output timing of reference speech data instead of the condition regarding the output count of the reference speech data. Hereinafter, description is given of an aspect in the case where the output condition is the condition regarding a past output timing of reference speech data.

In this aspect, as illustrated in FIG. 10, stored in the speech data table as the output condition for speech data is a condition regarding an elapsed time T since the reference speech data associated with the above-mentioned speech data was output last. According to FIG. 10, the output condition for the speech data "In no time, attacking from the left side!!" is satisfied if the elapsed time T since the speech data belonging to the speech group "G01" or the speech data belonging to the speech group "G02" was output last is less than five minutes.

Further, in this aspect, stored in the main memory 26 (storage means) is not only the group name of the speech group to which the already-output speech data belongs but also information for identifying an output timing of the speech data. For example, as the information for identifying the output timing of speech data, an output time instant for the above-mentioned speech data is stored.

With such a configuration, to judge whether or not the output condition for each item of the speech data belonging to the speech group X is satisfied, the microprocessor 14 executes the following processing in Steps S102 and S103.

That is, in Step S102, the microprocessor 14 acquires the elapsed time T since the reference speech data of the speech data belonging to the speech group X was output last based on the storage contents of the main memory 26. Note that if the reference speech data has not yet been output, the microprocessor 14 sets a value of the elapsed time T to "0".

Then, in Step S103, the microprocessor 14 judges whether or not the elapsed time T satisfies the output condition for each item of the speech data. Note that according to FIG. 10, to judge whether or not the elapsed time T satisfies the output condition for the speech data "Attacking from the left side!!", the microprocessor 14 judges whether or not the elapsed time T is 0. This resultantly means that the microprocessor 14 judges whether or not the reference speech data of the speech data "Attacking from the left side!!" has already been output.

Then, in Step S104, the microprocessor 14 outputs the speech data associated with the output condition satisfied by the elapsed time T among the speech data belonging to the speech group X (S104). Then, in Step S105, the microprocessor 14 (output timing storage means) stores the group name of the speech group X and the current time instant (output timing) in the main memory 26.

According to this aspect, if the reference speech data has already been output, the speech data to be output is caused to change according to the output timing of the reference speech data. For example, according to FIG. 10, in the case where the player object 34 of the operation subject team has performed a shooting action or a centering action in the right side region in the past, if only a short period of time has elapsed since the player object 34 of the operation subject team performed a shooting action or a centering action in the right side region in the past, the announcer states "Almost immediately, attacking from the left side!!", and if a long period of time has elapsed since the player object 34 of the operation subject team performed a shooting action or a centering action in the right side region in the past, the announcer states "Finally, attacking from the left side!!". Therefore, for example, the game player can be given an impression that the statement is being made as if the announcer were bearing in mind the period of time that has elapsed since the operation subject team made an attack from the right side region. Therefore, also according to this aspect, the reality regarding the outputting of a speech is further improved.

Further, in the above description, speech that describes the actual scene of the match is output. However, speech by which the announcer asks a commentator a question may be output. Hereinafter, description is made of an aspect in a case where the speech by which the announcer asks the commentator a question is output.

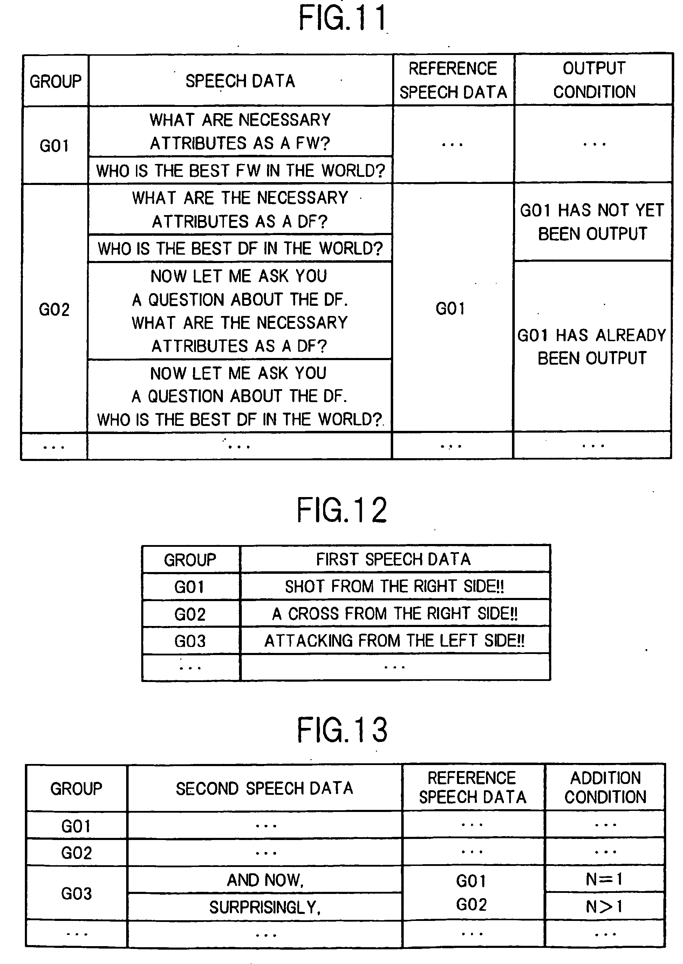

FIG. 11 illustrates an example of the speech data table according to this aspect. In this aspect, stored are the speech data for outputting the speech by which the announcer asks the commentator a question about a forward (FW) and the speech data for outputting the speech by which the announcer asks the commentator a question about a defender (DF). Further, in this aspect, stored as the output condition for the speech data is a condition regarding whether or not the reference speech data of the speech data has already been output. For example, the output condition for the speech data "What are necessary attributes as a DF?" is satisfied in a case where the speech data belonging to the speech group "G01" has not yet been output.

With such a configuration, to judge whether or not the output condition for each item of the speech data belonging to the speech group X is satisfied, the microprocessor 14 executes the following processing in Steps S102 and S103.

That is, in Step S102, the microprocessor 14 judges whether or not the reference speech data of the speech data belonging to the speech group X has already been output based on the storage contents of the main memory 26. Then, in Step S103, the microprocessor 14 judges whether or not the judgment result of Step S102 satisfies the output condition for each item of the speech data.

Then, in Step S104, the microprocessor 14 outputs the speech data associated with the output condition satisfied by the judgment result of Step S102 among the speech data belonging to the speech group X (S104). Note that in Step S101, the timing for selecting the speech group X may be any time. For example, the microprocessor 14 may select the speech group X at a predetermined time. Alternatively, for example, the microprocessor 14 may select the speech group X at random based on a random number.

According to this aspect, the speech of the question regarding the DF is caused to change according to whether or not the speech of the question regarding the FW has already been output. For example, according to FIG. 11, if the speech of the question regarding the FW has not yet been output, the announcer states "What are the necessary attributes as a DF?", and if the speech of the question regarding the FW has already been output, the announcer prefaces their statement with "Now let me ask you a question about the DF." before stating "What are the necessary attributes as a DF?". Therefore, the game player can be given an impression that the statement is being made as if the announcer were bearing their own past statements in mind. From this viewpoint, the same holds true of this aspect, that is, the reality in the case of outputting speech is improved.

### [Second embodiment]

In the above-mentioned first embodiment, if the player object 34 of the operation subject team has not previously performed a shooting action or a centering action in the right side region, the speech data "Attacking from the left side!!" is output, and if the player object 34 of the operation subject team has previously performed a shooting action or a centering action in the right side region, the speech data "And now, attacking from the left side!! " is output. That is, in the first embodiment, the speech data to be output is switched over according to whether or not the player object 34 of the operation subject team has performed a shooting action or a centering action in the right side region in the past. This is the same as the outputting of the speech data "Attacking from the left side!! " if the player object 34 of the operation subject team has not previously performed a shooting action or a centering action in the right side region and the outputting of the speech data "And now, " and the speech data "Attacking from the left side! ! " if the player object 34 of the operation subject team has previously performed a shooting action or a centering action in the right side region.

In a second embodiment, the game device 10 controls whether to output only main body speech data (for example, speech data "Attacking from the left side!!") or to output additional speech data (for example, speech data "And now, ") along with the main body speech data, thereby realizing the improvement of the reality regarding the outputting of speech. Hereinafter, description is given of the second embodiment.

The game device 10 according to the second embodiment has the same structure and configuration as in the first embodiment (see FIG. 1). The second embodiment also provides the same soccer game as in the first embodiment. Also in the second embodiment, in the same manner as the first embodiment, the game device 10 functionally includes the speech storage section 46, the already-output speech storage section 48, the game data storage section 50, and the output control section 52. The output control section 52 includes the judgment section 54 and the speech output section 56. Those functions are implemented by the microprocessor 14 executing the program read from the DVD-ROM 25. The function of the game data storage section 50 is the same as in the first embodiment. Hereinafter, description is made of the functions other than the game data storage section 50.

### [Speech storage section]

The speech storage section 46 (speech data storage means, reference speech data storage means, and condition storage means) is implemented mainly by the DVD-ROM 25. FIG. 12 illustrates a first speech data table stored in the speech storage section 46 according to the second embodiment. The first speech data table includes a group field, and a first speech data field. Stored in the first speech data field is main body speech data. Here, the main body speech data is audio data. Also stored in the group field is a group name of a speech group to which the main body speech data belongs.

Further, FIG. 13 illustrates a second speech data table stored in the speech storage section 46 according to the second embodiment. The second speech data table includes a group field, a second speech data field, a reference speech data field, and an addition condition field. Stored in the second speech data field is the additional speech data. Here, the additional speech data is audio data. Also stored in the group field is the group name of the speech group to which the additional speech data belongs.

Further, stored in the reference speech data field is information for identifying reference main body speech data. The outputting of the additional speech data is controlled based on whether or not the reference main body speech data of the additional speech data has already been output. In this embodiment, in the reference speech data field, as the information for identifying the reference main body speech data, there is stored the group name of the speech group to which the above-mentioned reference main body speech data belongs. Therefore, each item of the additional speech data is associated with the main body speech data belonging to the speech group stored in the reference speech data field as the reference main body speech data. Note that in the case of FIG. 13, the additional speech data belonging to the speech group "G03" is associated with the main body speech data belonging to the speech group "G01" and the main body speech data belonging to the speech group "G02" as the reference main body speech data thereof.

Further, stored in the addition condition field is an addition condition for the additional speech data. The addition condition is a condition for also outputting the additional speech data along with the main body speech data. For example, a condition regarding an output count N of the reference main body speech data is stored as the addition condition in the addition condition field. For example, in the case of FIG. 13, the condition regarding a total value N of the output counts of the main body speech data belonging to the speech group "G01" and the main body speech data belonging to the speech group "G02" is stored as the addition condition for the additional speech data belonging to the speech group "G03" in the addition condition field. According to FIG. 13, the addition condition for the additional speech data "And now," is satisfied if the total value N is 1. That is, the addition condition for the additional speech data "And now," is satisfied if the main body speech data belonging to the speech group "G01" or the main body speech data belonging to the speech group "G02" has already been output.

Note that also in the second embodiment, and in the same manner as the first embodiment, the speech storage section 46 stores the group table illustrated in FIG. 7. Accordingly, each item of the additional speech data is associated with a region (reference region) that forms the selection condition for the speech group to which the corresponding reference main body speech data thereof belongs.

### [Already-output speech storage section]

The already-output speech storage section 48 (storage means) is implemented mainly by the main memory 26. The already-output speech storage section 48 stores information indicating already-output main body speech data. In this embodiment, the already-output speech storage section 48 stores a group name of the speech group to which the already-output main body speech data belongs. FIG. 8 illustrates storage contents of the already-output speech storage section 48.

### [Output control section]

The output control section 52 is implemented mainly by the microprocessor 14 and the audio processing section 20. The output control section 52 uses functions of the judgment section 54 and the speech output section 56 to control outputting of additional speech data based on a judgment result as to whether or not the reference main body speech data of the additional speech data has already been output. Hereinafter, description is given of the judgment section 54 and the speech output section 56.

### [Judgment section]

The judgment section 54 judges whether or not the reference main body speech data associated with the additional speech data has already been output.

In this embodiment, the judgment section 54 references the game data storage section 50 to select one speech group X for which the selection condition is satisfied from among speech groups stored in the group field of the first speech data table.

In addition, the judgment section 54 judges whether or not the addition condition for each item of the additional speech data belonging to the speech group X is satisfied. Here, the judgment section 54 judges whether or not the total value N satisfies the addition condition for each item of the additional speech data. For example, to judge whether or not the addition condition for the additional speech data "And now," is satisfied, it is judged whether or not the total value N is 1.

### [Speech output section]

The speech output section 56 outputs one item of the main body speech data belonging to the speech group X. At this time, the speech output section 56 outputs one item of the additional speech data belonging to the speech group X along with the main body speech data based on the judgment result from the judgment section 54. In this embodiment, the speech output section 56 outputs the additional speech data associated with an addition condition satisfied by the total value N and the main body speech data in the stated order.

As a result, for example, according to FIG. 13, if the judgment section 54 obtains a judgment result A (first judgment result) that the reference main body speech data (that is, main body speech data belonging to the speech group "G01" and main body speech data belonging to the speech group "G02") of the additional speech data (second speech data) belonging to the speech group "G03" has not yet been output, the speech output section 56 outputs the main body speech data "Attacking from the left side!! " (first speech data) belonging to the speech group "G03". Meanwhile, if the judgment section 54 obtains a judgment result B (second judgment result) that the reference main body speech data of the additional speech data (second speech data) belonging to the speech group "G03" has already been output, the speech output section 56 outputs the additional speech data "And now," (second speech data) belonging to the speech group "G03" and the main body speech data "Attacking from the left side!!" (first speech data) belonging to the speech group "G03", or outputs the additional speech data "Surprisingly," (second speech data) belonging to the speech group "G03" and the main body speech data "Attacking from the left side!!" (first speech data) belonging to the speech group "G03". In this case, the speech output section 56 outputs the additional speech data "And now," if the output count N of the reference main body speech data satisfies the addition condition for the additional speech data "And now,", and outputs the additional speech data "Surprisingly," if the output count N satisfies the addition condition for the additional speech data "Surprisingly,".

In addition, when outputting the main body speech data, the speech output section 56 also stores information indicating the main body speech data in the already-output speech storage section 48. For example, as the information indicating the main body speech data that has been output, the speech output section 56 stores the group name of the speech group X to which the main body speech data belongs in the already-output speech storage section 48.

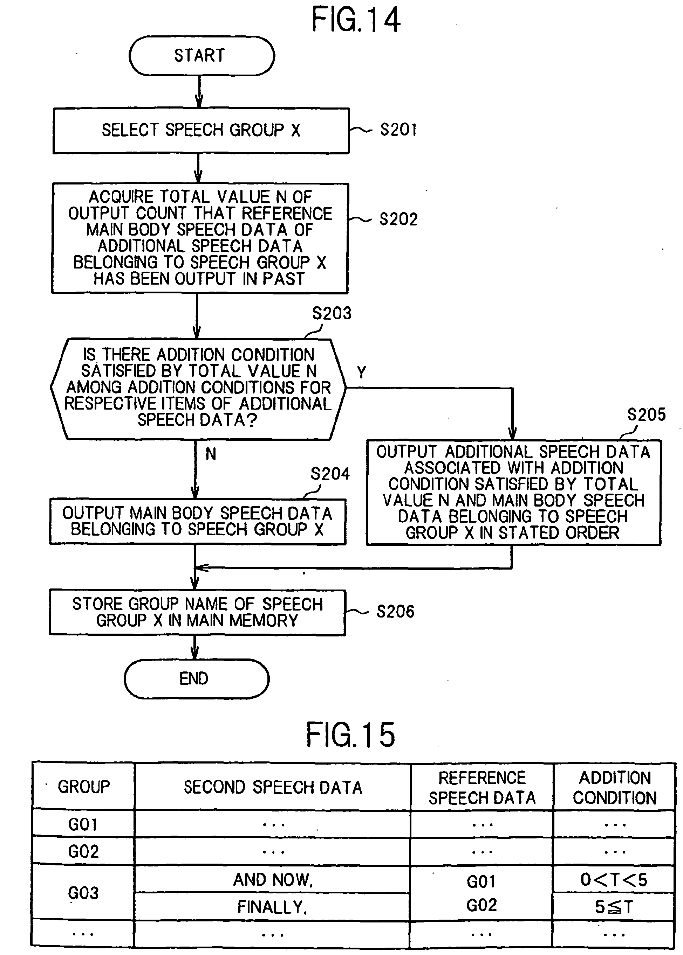

FIG. 14 is a flowchart mainly illustrating processing related to the present invention among the processing executed by the game device 10 according to the second embodiment. The microprocessor 14 executes the processing illustrated in FIG. 14 according to the programs stored in the DVD-ROM 25.

The microprocessor 14 selects the one speech group X for which the selection condition is satisfied from among the speech groups (S201). Specifically, when the player object 34 of the operation subject team performs a certain action, the microprocessor 14 selects the speech group X associated with the type of action and a region in which the action is being performed by the player object 34 of the operation subject team.

Then, the microprocessor 14 judges in Steps S202 and S203 whether or not the addition condition is satisfied for each item of the additional speech data belonging to the speech group X.

That is, based on the storage contents of the main memory 26, the microprocessor 14 (output count acquiring means) acquires the total value N of the output count for the number of times the reference main body speech data of the additional speech data belonging to the speech group X has been output in the past (S202).

Further, the microprocessor 14 judges whether or not the total value N satisfies the addition condition for each item of the additional speech data belonging to the speech group X to thereby judge whether or not there is an addition condition satisfied by the total value N among the addition conditions for the respective items of the additional speech data (S203).

Then, if there is no addition condition satisfied by the total value N among the addition conditions for the respective items of the additional speech data (N in S203), the microprocessor 14 outputs only the main body speech data belonging to the speech group X (S204). Meanwhile, if there is an addition condition satisfied by the total value N among the addition conditions for the respective items of the additional speech data (Y in S203), the microprocessor 14 outputs the additional speech data associated with the addition condition satisfied by the total value N and the main body speech data belonging to the speech group X in the stated order. For example, as a result, in the case where the speech group X is the speech group "G03", if neither the main body speech data of the speech group "G01" nor the main body speech data of the speech group "G02" has been output yet, the microprocessor 14 outputs only the main body speech data "Attacking from the left side!!". Further, if the total value N of the output count for the number of times that the main body speech data of the speech group "G01" and the main body speech data of the speech group "G02" have been output in the past is 1, the microprocessor 14 outputs the additional speech data "And now," and the main body speech data "Attacking from the left side! !" in the stated order. Alternatively, if the total value N is equal to or larger than 2, the microprocessor 14 outputs the additional speech data "Surprisingly, and the main body speech data "Attacking from the left side!!" in the stated order.

Then, the microprocessor 14 stores the group name of the speech group X in the main memory 26 (S206).

Also in the second embodiment, in the same manner as the first embodiment, when the player object 34 of the operation subject team performs a dribbling action in the left side region, if the player object 34 of the operation subject team has not performed a shooting action or a centering action in the right side region in the past, the announcer states "Attacking from the left side!!", and when the player object 34 of the operation subject team performs a dribbling action in the left side region, if the player object 34 of the operation subject team has performed a shooting action or a centering action in the right side region in the past, the announcer states "And now, attacking from the left side!! " or "Surprisingly, attacking from the left side! !". Therefore, also in the second embodiment, the reality regarding the outputting of speech is improved.

Further, in the second embodiment, the data necessary for the judgment as to whether or not the player object 34 of the operation subject team has performed a shooting action or a centering action in the right side region in the past is only the information (here, speech group to which the main body speech data belongs) indicating the main body speech data to be output in the case where the player object 34 of the operation subject team has performed a shooting action or a centering action in the right side region in the past. Therefore, also in the second embodiment, it is possible to realize improvement in reality regarding the outputting of a speech relatively simply.

Further, also in the second embodiment, in the same manner as the first embodiment, on the game device 10, in the case where the player object 34 of the operation subject team has performed a shooting action or a centering action in the right side region in the past, if the count for the number of times that the player object 34 of the operation subject team has performed a shooting action or a centering action in the right side region in the past is small, the announcer states "And now, attacking from the left side!! ", and if the count for the number of times that the player object 34 of the operation subject team has performed a shooting action or a centering action in the right side region in the past is large, the announcer states "Surprisingly, attacking from the left side!!". Therefore, also in the second embodiment, reality regarding the outputting of speech is further improved.

Note that the addition condition may be a condition regarding past output timing of reference main body speech data instead of the condition regarding the output count of the reference main body speech data. Hereinafter, description is given of an aspect in the case where the addition condition is the condition regarding a past output timing of reference main body speech data.

In this aspect, as illustrated in FIG. 15, stored in the second speech data table as the addition condition for additional speech data is a condition regarding an elapsed time T since the reference main body speech data was output last. According to FIG. 15, the addition condition for the additional speech data "Almost immediately," is satisfied if the elapsed time T since the main body speech data belonging to the speech group "G01" or the main body speech data belonging to the speech group "G02" was output last is less than five minutes.

Further, in this aspect, stored in the main memory 26 (storage means) are not only the group name of the speech group to which the already-output main body speech data belongs but also information for identifying an output timing of the main body speech data. For example, as the information for identifying the output timing of main body speech data, an output time for the above-mentioned main body speech data is stored.

With such a configuration, to judge whether or not the addition condition for each item of the additional speech data belonging to the speech group X is satisfied, the microprocessor 14 executes the following processing in Steps S202 and S203.

That is, in Step S202, the microprocessor 14 acquires the elapsed time T since the reference main body speech data of the additional speech data belonging to the speech group X was output last based on the storage contents of the main memory 26. Note that if the reference main body speech data has not yet been output, the microprocessor 14 sets a value of the elapsed time T to 0.

Further, the microprocessor 14 judges whether or not the elapsed time T satisfies the addition condition for each item of the additional speech data belonging to the speech group X to thereby judge whether or not there is an addition condition satisfied by the elapsed time T, among the addition conditions for the respective items of the additional speech data (S203).

Then, if there is no addition condition satisfied by the elapsed time T among the addition conditions for the respective items of the additional speech data (N in S203), the microprocessor 14 outputs only the main body speech data belonging to the speech group X (S204). Meanwhile, if there is an addition condition satisfied by the elapsed time T among the addition conditions for the respective items of the additional speech data (Y in S203), the microprocessor 14 outputs the additional speech data associated with the addition condition satisfied by the elapsed time T and the main body speech data belonging to the speech group X in the stated order (S205).

Then, the microprocessor 14 (output timing storage means) stores the group name of the speech group X and the current time instant (output timing) in the main memory 26 (S206).

Also according to this aspect, in the same manner as the first embodiment, in the case where the player object 34 of the operation subject team has performed a shooting action or a centering action in the right side region in the past, if only a short period of time has elapsed since the player object 34 of the operation subject team performed a shooting action or a centering action in the right side region in the past, the announcer states "Almost immediately, attacking from the left side!!", and if a long period of time has elapsed since the player object 34 of the operation subject team performed a shooting action or a centering action in the right side region in the past, the announcer states "Finally, attacking from the left side! !". Therefore, also according to this aspect, in the same manner as the first embodiment, the reality regarding the outputting of speech is further improved.

Further, in the second embodiment, in the same manner as the first embodiment, the speech uttered by the announcer may be speech of a question to ask the commentator. Hereinafter, description is given of an aspect in a case where the speech uttered by the announcer may be the speech of a question to ask the commentator.

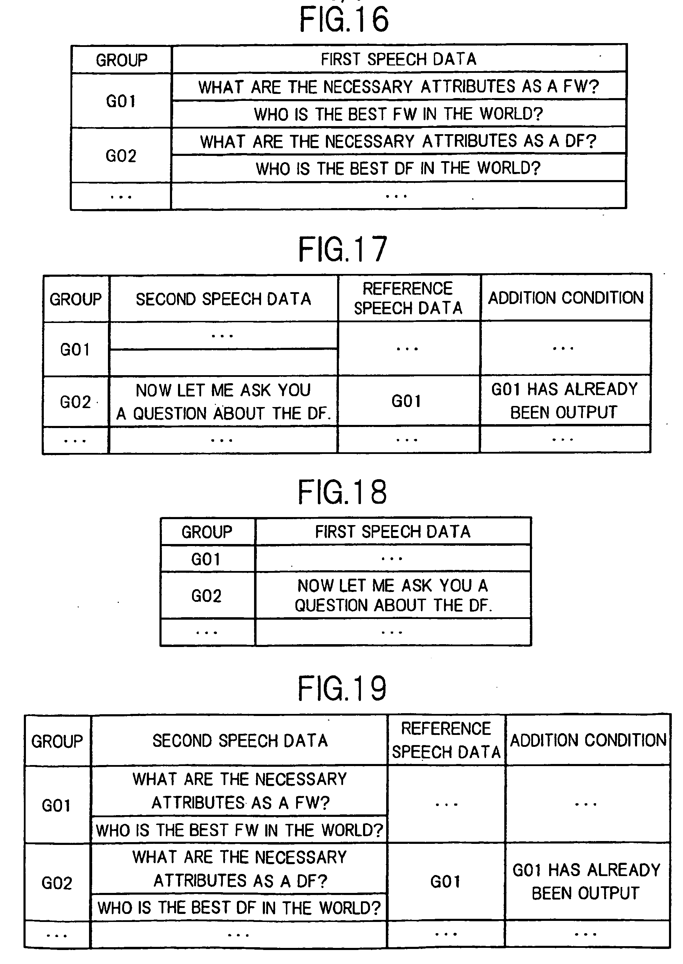

FIG. 16 illustrates an example of the storage contents of the first speech data table according to this aspect. Further, FIG. 17 illustrates an example of the storage contents of the second speech data table according to this aspect. In this aspect, stored as the addition condition for each item of the additional speech data stored in the second speech data field is a condition regarding whether or not the reference main body speech data of the additional speech data has already been output (see FIG. 17). For example, the addition condition for the additional speech data "Now let me ask you a question about the DF." is satisfied if the main body speech data belonging to the speech group "G01" has already been output.

With such a configuration, to judge whether or not the addition condition for each item of the additional speech data belonging to the speech group X is satisfied, the microprocessor 14 executes the following processing in Steps S202 and S203.

That is, in Step S202, the microprocessor 14 judges whether or not the reference main body speech data of the additional speech data belonging to the speech group X has already been output based on the storage contents of the main memory 26. Then, in Step S203, the microprocessor 14 judges whether or not the judgment result of Step S202 satisfies the addition condition for the additional speech data.

Then, if the judgment result of Step S202 does not satisfy the addition condition for the additional speech data (N in S203), the microprocessor 14 outputs only the main body speech data belonging to the speech group X (S204). Meanwhile, if the judgment result of Step S202 satisfies the addition condition for the additional speech data (Y in S203), the microprocessor 14 outputs the additional speech data associated with the addition condition satisfied by judgment result of Step 5202 and the main body speech data belonging to the speech group X in the stated order (S205).

Also in this aspect, in the same manner as the first embodiment, if the speech of the question regarding the FW has not yet been output, the announcer states "What are the necessary attributes as a DF?", and if the speech of the question regarding the FW has already been output, the announcer prefaces their statement with "Now let me ask you a question about the DF." before "What are the necessary attributes as a DF?". Also according to this aspect, in the same manner as the first embodiment, the reality regarding outputting of speech is improved.

Note that here, the main body speech data is stored in the first speech data field of the first speech data table, and the additional speech data is stored in the second speech data field of the second speech data table. However, as illustrated in FIG. 18 and FIG. 19, the additional speech data may be stored in the first speech data field, and the main body speech data may be stored in the second speech data field. Even with this configuration, if the speech of the question regarding the FW has not yet been output, the announcer states "What are the necessary attributes as a DF?", and if the speech of the question regarding the FW has already been output, the announcer prefaces their statement with "Now let me ask you a question about the DF." before "What are the necessary attributes as a DF?". Hereinafter, description is given of this aspect. Note that hereinbelow, the main body speech data belonging to the speech group stored in the reference speech data field is called the reference main body speech data of the main body speech data stored in the second speech data field, and the addition condition stored in the addition condition field is called the addition condition for the main body speech data stored in the second speech data field.

In this aspect, after selecting the speech group X in Step S201, the microprocessor 14 judges in Steps S202 and S203 whether or not the addition condition for the main body speech data belonging to the speech group X is satisfied.

That is, the microprocessor 14 judges in Step S202 based on the storage contents of the main memory 26 whether or not the reference main body speech data of the main body speech data belonging to the speech group X has already been output. Then, the microprocessor 14 judges in Step S203 whether or not the judgment result of Step S202 satisfies the addition condition for the main body speech data.

Then, if the judgment result of Step S202 does not satisfy the addition condition for the main body speech data (N in S203), the microprocessor 14 outputs only the main body speech data (S204). Meanwhile, if the judgment result of Step S202 satisfies the addition condition for the main body speech data (Y in S203), the microprocessor 14 outputs the additional speech data belonging to the speech group X and the main body speech data in the stated order (S205). As a result, for example, according to FIG. 19, if the judgment result A (first judgment result) , that the reference main body speech data (that is, main body speech data belonging to the speech group "G01") of the main body speech data (first speech data) belonging to the speech group "G02" has not yet been output, is obtained, the microprocessor 14 outputs the main body speech data (first speech data). Meanwhile, if the judgment result B (second judgment result), that the reference main body speech data of the main body speech data (first speech data) belonging to the speech group "G02" has already been output, is obtained, the microprocessor 14 outputs the additional speech data (second speech data) belonging to the speech group "G03" and the main body speech data (first speech data) in the stated order.

Accordingly, also in this aspect, if the speech of the question regarding the FW has not yet been output, the announcer states "What are the necessary attributes as a DF?", and if the speech of the question regarding the FW has already been output, the announcer prefaces their statement with "Now let me ask you a question about the DF." before "What are the necessary attributes as the DF?".

Note that the present invention is not limited to the embodiment described above.

For example, in the above-mentioned second embodiment, in Step S205, the microprocessor 14 outputs the additional speech data ahead of the main body speech data. However, in this step, the additional speech data may be output after the main body speech data.

Further, for example, in Step S205, the microprocessor 14 may generate new speech data by combining the additional speech data and the main body speech data to output the new speech data.

Further, for example, in the above-mentioned first embodiment and second embodiment, the speech data, the main body speech data, and the additional speech data are audio data. However, those data may be text data. In this case, the microprocessor 14 may display text based on those data on the game screen.

Further, the game provided on the game device 10 may be any game other than the soccer game as long as speech is output therein.

## Claims

1. A game device (10), comprising:
speech data storage means (46) for storing speech data;
reference speech data storage means for storing reference speech data in association with the speech data;
means for storing information indicating already-output speech data (48) in storage means; and
output control means (52) for controlling outputting of the speech data based on a judgment result as to whether or not the reference speech data associated with the speech data has already been output by using a judgment section (54) and a speech output section (56), wherein the judgment section (54) is operable to
select one speech group X for which a selection condition is satisfied from among speech groups stored in a group field of a speech data table, wherein the selection condition is formed of an action type of a player object (34) of an operation subject team and a region name and wherein the selection condition is satisfied if the player object (34) of the operation subject team performs an action that forms the selection condition in a region that forms the same selection condition and
judge whether or not the output condition for each item of the speech data belonging to the speech group X is satisfied by acquiring the elapsed time T since the reference speech data of the speech data belonging to the speech group X have been output last based on the storage contents of the means for storing information indicating already-output speech data (48), wherein if the reference speech data has not yet been output, setting a value of the elapsed time T to "0" and by judging whether or not the elapsed time T satisfies the output condition for each item of the speech data, comprising judging whether or not the elapsed time T is 0.

2. A game device according to claim 1, wherein:
the speech data storage means (46) stores first speech data and second speech data;
the reference speech data storage means stores the reference speech data in association with the first speech data or the second speech data;
the output control means (52) outputs the first speech data if a judgment result as to whether or not the reference speech data associated with the first speech data or the second speech data has already been output is a first judgment result; and
the output control means (52) outputs the second speech data instead of the first speech data if the judgment result is a second judgment result.

3. A game device according to claim 1, wherein:
the speech data storage means (46) stores first speech data and second speech data;
the reference speech data storage means stores the reference speech data in association with the first speech data or the second speech data;
the output control means (52) outputs the first speech data if a judgment result as to whether or not the reference speech data associated with the first speech data or the second speech data has already been output is a first judgment result; and
the output control means (52) outputs the first speech data and the second speech data if the judgment result is a second judgment result.

4. A game device according to claim 1, further comprising display control means for displaying a state of a game space on a game screen, wherein:
the reference speech data storage means comprises:
means for storing a reference region within the game space in association with the reference speech data; and
means for storing the reference region in association with the speech data; and
the output control means (52) controls the outputting of the speech data based on a judgment result as to whether or not the reference speech data associated with the reference region associated with the speech data has already been output.

5. A game device according to claim 2, further comprising condition storage means for storing a condition regarding an output count of the reference speech data, wherein:
the output control means (52) comprises output count acquiring means for acquiring the output count of the reference speech data; and
in a case where the judgment result is the second judgment result that the reference speech data has already been output, if the output count acquired by the output count acquiring means satisfies the condition, the output control means (52) outputs the second speech data.

6. A game device according to claim 3, further comprising condition storage means for storing a condition regarding an output count of the reference speech data, wherein:
the output control means (52) comprises output count acquiring means for acquiring the output count of the reference speech data; and
in a case where the judgment result is the second judgment result that the reference speech data has already been output, if the output count acquired by the output count acquiring means satisfies the condition, the output control means (52) outputs the second speech data.

7. A game device control method, comprising:
a step of reading storage content of speech data storage means (46) storing speech data;
a step of reading storage content of reference speech data storage means storing reference speech data in association with the speech data;
a step of storing information indicating already-output speech data in storage means (48); and
an output control step of controlling outputting of the speech data based on a judgment result as to whether or not the reference speech data associated with the speech data has already been output by using a judgment section (54) and a speech output section (56), wherein the judgment section (54) performs the steps of
selecting one speech group X for which a selection condition is satisfied from among speech groups stored in a group field of a speech data table, wherein the selection condition is formed of an action type of a player object (34) of an operation subject team and a region name and wherein the selection condition is satisfied if the player object (34) of the operation subject team performs an action that forms the selection condition in a region that forms the same selection condition and
judging whether or not the output condition for each item of the speech data belonging to the speech group X is satisfied by acquiring the elapsed time T since the reference speech data of the speech data belonging to the speech group X have been output last based on the storage contents of the means for storing information indicating already-output speech data (48), wherein if the reference speech data has not yet been output, setting a value of the elapsed time T to "0" and by judging whether or not the elapsed time T satisfies the output condition for each item of the speech data, comprising judging whether or not the elapsed time T is 0.

8. A program for causing a computer to function as a game device,
the program further causing the computer to function as:
means for reading storage content of speech data storage means (46) storing speech data;
means for reading storage content of reference speech data storage means storing reference speech data in association with the speech data;
means for storing information indicating already-output speech data in storage means (48); and
output control means (52) for controlling outputting of the speech data based on a judgment result as to whether or not the reference speech data associated with the speech data has already been output by using a judgment section (54) and a speech output section (56), wherein the judgment section (54) is operable to
select one speech group X for which a selection condition is satisfied from among speech groups stored in a group field of a speech data table, wherein the selection condition is formed of an action type of a player object (34) of an operation subject team and a region name and wherein the selection condition is satisfied if the player object (34) of the operation subject team performs an action that forms the selection condition in a region that forms the same selection condition and
judge whether or not the output condition for each item of the speech data belonging to the speech group X is satisfied by acquiring the elapsed time T since the reference speech data of the speech data belonging to the speech group X have been output last based on the storage contents of the means for storing information indicating already-output speech data (48),
wherein if the reference speech data has not yet been output, setting a value of the elapsed time T to "0" and by judging whether or not the elapsed time T satisfies the output condition for each item of the speech data, comprising judging whether or not the elapsed time T is 0.

9. A computer-readable information storage medium having stored therein a program for causing a computer to function as a game device,
the program further causing the computer to function as:
means for reading storage content of speech data storage means (46) storing speech data;
means for reading storage content of reference speech data storage means storing reference speech data in association with the speech data;
means for storing information indicating already-output speech data in storage means (48); and
output control means (52) for controlling outputting of the speech data based on a judgment result as to whether or not the reference speech data associated with the speech data has already been output by using a judgment section (54) and a speech output section (56), wherein the judgment section (54) is operable to
select one speech group X for which a selection condition is satisfied from among speech groups stored in a group field of a speech data table, wherein the selection condition is formed of an action type of a player object (34) of an operation subject team and a region name and wherein the selection condition is satisfied if the player object (34) of the operation subject team performs an action that forms the selection condition in a region that forms the same selection condition and
judge whether or not the output condition for each item of the speech data belonging to the speech group X is satisfied by acquiring the elapsed time T since the reference speech data of the speech data belonging to the speech group X have been output last based on the storage contents of the means for storing information indicating already-output speech data (48), wherein if the reference speech data has not yet been output, setting a value of the elapsed time T to "0" and by judging whether or not the elapsed time T satisfies the output condition for each item of the speech data, comprising judging whether or not the elapsed time T is 0.

## Patentansprüche

1. Eine Spielvorrichtung (10), die Folgendes umfasst:
Sprachdaten-Speichermittel (46) zur Speicherung von Sprachdaten;
Referenzsprachdaten-Speichermittel zur Speicherung von Referenzsprachdaten in Verbindung mit den Sprachdaten;
Mittel zur Speicherung von Information, die auf schon ausgegebene Sprachdaten (48) im Speichermittel hinweist; und
Ausgabe-Steuermittel (52) zur Steuerung des Vorgangs der Ausgabe von Sprachdaten basierend auf einem Beurteilungsergebnis bezüglich der Frage, ob die Referenzsprachdaten, die mit den Sprachdaten assoziiert sind, schon ausgegeben wurden oder nicht, unter Verwendung eines Beurteilungsabschnitts (54) und eines Sprachausgabeabschnitts (56), wobei der Beurteilungsabschnitt (54) dazu betreibbar ist:
eine Sprachgruppe X auszuwählen, für die eine Selektionsbedingung erfüllt wird, ausgehend von Sprachgruppen, die in einem Gruppenfeld einer Sprachdatentabelle gespeichert sind, wobei die Selektionsbedingung aus einem Aktionstyp eines Spielerobjekts (34) einer betätigungsunterworfenen Mannschaft *(operation subject team)* gebildet wird und aus einem Gebietsnamen, und wobei die Selektionsbedingung erfüllt wird, wenn das Spielerobjekt (34) der betätigungsunterworfenen Mannschaft eine Handlung vollzieht, die die Selektionsbedingung in einem Gebiet bildet, das die gleiche Selektionsbedingung bildet und
die Frage zu beurteilen, ob die Ausgabebedingung für jede Einheit (*item*) der Sprachdaten, die zur Sprachgruppe X gehören erfüllt ist oder nicht, durch die Erfassung der verstrichenen Zeit T seit die Referenzsprachdaten der zur Sprachgruppe X gehörenden Sprachdaten zuletzt ausgegeben wurden, basierend auf dem Speicherinhalt des Mittels zur Speicherung von Information, die auf schon ausgegebene Sprachdaten (48) hinweist, wobei, wenn die Referenzsprachdaten bis dahin noch nicht ausgegeben wurden, ein Wert der verstrichenen Zeit T auf "0" gesetzt wird und durch die Beurteilung der Frage, ob die verstrichene Zeit T die Ausgabebedingung für jede Einheit der Sprachdaten erfüllt oder nicht, was die Beurteilung der Frage umfasst, ob die verstrichene Zeit T "0" ist oder nicht.

2. Eine Spielvorrichtung nach Anspruch 1, wobei:
das Sprachdaten-Speichermittel (46) erste Sprachdaten und zweite Sprachdaten speichert;
das Referenzsprachdaten-Speichermittel die Referenzsprachdaten in Verbindung mit den ersten Sprachdaten oder den zweiten Sprachdaten speichert;
das Ausgabe-Steuermittel (52) die ersten Sprachdaten ausgibt, wenn ein Beurteilungsergebnis bezüglich der Frage, ob die Referenzsprachdaten, die mit den ersten Sprachdaten oder den zweiten Sprachdaten assoziiert sind, schon ausgegeben wurden oder nicht, ein erstes Beurteilungsergebnis darstellt; und
das Ausgabe-Steuermittel (52) die zweiten Sprachdaten anstelle der ersten Sprachdaten ausgibt, wenn das Beurteilungsergebnis ein zweites Beurteilungsergebnis darstellt.

3. Eine Spielvorrichtung nach Anspruch 1, wobei:
das Sprachdaten-Speichermittel (46) erste Sprachdaten und zweite Sprachdaten speichert;
das Referenzsprachdaten-Speichermittel die Referenzsprachdaten in Verbindung mit den ersten Sprachdaten oder den zweiten Sprachdaten speichert;
das Ausgabe-Steuermittel (52) die ersten Sprachdaten ausgibt, wenn ein Beurteilungsergebnis bezüglich der Frage, ob die Referenzsprachdaten, die mit den ersten Sprachdaten oder den zweiten Sprachdaten assoziiert sind, schon ausgegeben wurden oder nicht, ein erstes Beurteilungsergebnis darstellt; und
das Ausgabe-Steuermittel (52) die ersten Sprachdaten und die zweiten Sprachdaten ausgibt, wenn das Beurteilungsergebnis ein zweites Beurteilungsergebnis darstellt.

4. Eine Spielvorrichtung nach Anspruch 1, die des Weiteren ein Anzeigesteuerungsmittel umfasst, um einen Zustand des Spielraums auf einem Spielbildschirm anzuzeigen, wobei:
das Referenzsprachdaten-Speichermittel Folgendes umfasst:
Mittel zur Speicherung eines Referenzgebiets innerhalb des Spielraums in Verbindung mit den Referenzsprachdaten; und
Mittel zur Speicherung des Referenzgebiets in Verbindung mit den Sprachdaten; und
das Ausgabe-Steuermittel (52) den Vorgang der Ausgabe von Sprachdaten steuert, basierend auf einem Beurteilungsergebnis bezüglich der Frage, ob die Referenzsprachdaten, die mit dem Referenzgebiet assoziiert sind, die mit den Sprachdaten assoziiert ist, schon ausgegeben wurden oder nicht.

5. Eine Spielvorrichtung nach Anspruch 2, die des Weiteren ein Bedingungen-Speichermittel umfasst, um eine Bedingung eine Zählung der Ausgabe von Referenzsprachdaten betreffend zu speichern, wobei:
das Ausgabe-Steuermittel (52) ein Ausgabezählungs-Erfassungsmittel umfasst, um die Anzahl der Ausgaben der Referenzsprachdaten zu erfassen; und
falls das Beurteilungsergebnis das zweite Beurteilungsergebnis ist, dass also die Referenzsprachdaten schon ausgegeben wurden, wenn die durch das Ausgabezählungs-Erfassungsmittel erfasste Ausgabezählung die Bedingung erfüllt, das Ausgabe-Steuermittel (52) die zweiten Sprachdaten ausgibt.

6. Eine Spielvorrichtung nach Anspruch 3, die des Weiteren ein Bedingungen-Speichermittel umfasst, um eine Bedingung eine Zählung der Ausgabe von Referenzsprachdaten betreffend zu speichern, wobei:
das Ausgabe-Steuermittel (52) ein Ausgabezählungs-Erfassungsmittel umfasst, um die Anzahl der Ausgaben der Referenzsprachdaten zu erfassen; und
falls das Beurteilungsergebnis das zweite Beurteilungsergebnis ist, dass also die Referenzsprachdaten schon ausgegeben wurden, wenn die durch das Ausgabezählungs-Erfassungsmittel erfasste Ausgabezählung die Bedingung erfüllt, das Ausgabe-Steuermittel (52) die zweiten Sprachdaten ausgibt.

7. Ein Spielvorrichtungs-Steuerverfahren, das folgendes umfasst:
einen Schritt, der das Auslesen von Speicherinhalt eines Sprachdaten-Speichermittels (46) betrifft;
einen Schritt, der das Auslesen von Speicherinhalt eines Referenzsprachdaten-Speichermittels betrifft, der Referenzsprachdaten in Verbindung mit den Sprachdaten speichert;
einen Schritt, der das Speichern von Information betrifft, die auf schon ausgegebene Sprachdaten im Speichermittel (48) hinweist; und
ein Ausgabe-Steuerschritt zur Steuerung des Vorgangs der Ausgabe von Sprachdaten basierend auf einem Beurteilungsergebnis bezüglich der Frage, ob die Referenzsprachdaten, die mit den Sprachdaten assoziiert sind, schon ausgegeben wurden oder nicht, unter Verwendung eines Beurteilungsabschnitts (54) und eines Sprachausgabeabschnitts (56), wobei der Beurteilungsabschnitt (54) die folgenden Schritte ausführt:
auswählen einer Sprachgruppe X, für die eine Selektionsbedingung erfüllt wird, ausgehend von Sprachgruppen, die in einem Gruppenfeld einer Sprachdatentabelle gespeichert sind, wobei die Selektionsbedingung aus einem Aktionstyp eines Spielerobjekts (34) einer betätigungsunterworfenen Mannschaft gebildet wird und aus einem Gebietsnamen, und wobei die Selektionsbedingung erfüllt wird, wenn das Spielerobjekt (34) der betätigungsunterworfenen Mannschaft eine Handlung vollzieht, die die Selektionsbedingung in einem Gebiet bildet, das die gleiche Selektionsbedingung bildet und
beurteilen der Frage, ob die Ausgabebedingung für jede Einheit der zur Sprachgruppe X gehörenden Sprachdaten erfüllt ist oder nicht, durch die Erfassung der verstrichenen Zeit T seit die Referenzsprachdaten der zur Sprachgruppe X gehörenden Sprachdaten zuletzt ausgegeben wurden, basierend auf dem Speicherinhalt des Mittels zur Speicherung von Information, die auf schon ausgegebene Sprachdaten (48) hinweist, wobei, wenn die Referenzsprachdaten bis dahin noch nicht ausgegeben wurden, ein Wert der verstrichenen Zeit T auf "0" gesetzt wird und durch die Beurteilung der Frage, ob die verstrichene Zeit T die Ausgabebedingung für jede Einheit der Sprachdaten erfüllt oder nicht, was die Beurteilung der Frage umfasst, ob die verstrichene Zeit T "0" ist oder nicht.

8. Ein Programm, um zu bewirken, dass ein Computer als Spielvorrichtung funktioniert,
wobei das Programm des Weiteren bewirkt, dass der Computer wie folgend funktioniert:
als Mittel zum Auslesen von Speicherinhalt eines Sprachdaten-Speichermittels (46), das Sprachdaten speichert;
als Mittel zum Auslesen von Speicherinhalt eines Referenzsprachdaten-Speichermittels, das Referenzsprachdaten in Verbindung mit den Sprachdaten speichert;
als Mittel zum Speichern von Information, die auf schon ausgegebene Sprachdaten im Speichermittel (48) hinweist; und
als Ausgabe-Steuermittel (52) zur Steuerung des Vorgangs der Ausgabe von Sprachdaten basierend auf einem Beurteilungsergebnis bezüglich der Frage, ob die Referenzsprachdaten, die mit den Sprachdaten assoziiert sind, schon ausgegeben wurden oder nicht, unter Verwendung eines Beurteilungsabschnitts (54) und eines Sprachausgabeabschnitts (56), wobei der Beurteilungsabschnitt (54) wie folgt betreibbar ist:
auswählen einer Sprachgruppe X, für die eine Selektionsbedingung erfüllt wird, ausgehend von Sprachgruppen, die in einem Gruppenfeld einer Sprachdatentabelle gespeichert sind, wobei die Selektionsbedingung aus einem Aktionstyp eines Spielerobjekts (34) einer betätigungsunterworfenen Mannschaft gebildet wird und aus einem Gebietsnamen, und wobei die Selektionsbedingung erfüllt wird, wenn das Spielerobjekt (34) der betätigungsunterworfenen Mannschaft eine Handlung vollzieht, die die Selektionsbedingung in einem Gebiet bildet, das die gleiche Selektionsbedingung bildet und
beurteilen der Frage, ob die Ausgabebedingung für jede Einheit der zur Sprachgruppe X gehörenden Sprachdaten erfüllt ist oder nicht durch die Erfassung der verstrichenen Zeit T seit die Referenzsprachdaten der zur Sprachgruppe X gehörenden Sprachdaten zuletzt ausgegeben wurden, basierend auf dem Speicherinhalt des Mittels zur Speicherung von Information, die auf schon ausgegebene Sprachdaten (48) hinweist, wobei, wenn die Referenzsprachdaten bis dahin noch nicht ausgegeben wurden, ein Wert der verstrichenen Zeit T auf "0" gesetzt wird, und durch die Beurteilung der Frage, ob die verstrichene Zeit T die Ausgabebedingung für jede Einheit der Sprachdaten erfüllt oder nicht, was die Beurteilung der Frage umfasst, ob die verstrichene Zeit T "0" ist oder nicht.

9. Ein computerlesbares Informationsspeichermedium, auf dem ein Programm gespeichert ist, um zu bewirken, dass ein Computer als Spielvorrichtung funktioniert,
wobei das Programm des Weiteren bewirkt, dass der Computer wie folgend funktioniert:
als Mittel zum Auslesen von Speicherinhalt eines Sprachdaten-Speichermittels (46), das Sprachdaten speichert;
als Mittel zum Auslesen von Speicherinhalt eines Referenzsprachdaten-Speichermittels, das Referenzsprachdaten in Verbindung mit den Sprachdaten speichert;
als Mittel zum Speichern von Information, die auf schon ausgegebene Sprachdaten im Speichermittel (48) hinweist; und
als Ausgabe-Steuermittel (52) zur Steuerung des Vorgangs der Ausgabe von Sprachdaten basierend auf einem Beurteilungsergebnis bezüglich der Frage, ob die Referenzsprachdaten, die mit den Sprachdaten assoziiert sind, schon ausgegeben wurden oder nicht, unter Verwendung eines Beurteilungsabschnitts (54) und eines Sprachausgabeabschnitts (56), wobei der Beurteilungsabschnitt (54) wie folgt betreibbar ist:
auswählen einer Sprachgruppe X, für die eine Selektionsbedingung erfüllt wird, ausgehend von Sprachgruppen, die in einem Gruppenfeld einer Sprachdatentabelle gespeichert sind, wobei die Selektionsbedingung aus einem Aktionstyp eines Spielerobjekts (34) einer betätigungsunterworfenen Mannschaft gebildet wird und aus einem Gebietsnamen, und wobei die Selektionsbedingung erfüllt wird, wenn das Spielerobjekt (34) der betätigungsunterworfenen Mannschaft eine Handlung vollzieht, die die Selektionsbedingung in einem Gebiet bildet, das die gleiche Selektionsbedingung bildet und
beurteilen der Frage, ob die Ausgabebedingung für jede Einheit der zur Sprachgruppe X gehörenden Sprachdaten erfüllt ist oder nicht durch die Erfassung der verstrichenen Zeit T seit die Referenzsprachdaten der zur Sprachgruppe X gehörenden Sprachdaten zuletzt ausgegeben wurden, basierend auf dem Speicherinhalt des Mittels zur Speicherung von Information, die auf schon ausgegebene Sprachdaten (48) hinweist, wobei, wenn die Referenzsprachdaten bis dahin noch nicht ausgegeben wurden, ein Wert der verstrichenen Zeit T auf "0" gesetzt wird, und durch die Beurteilung der Frage, ob die verstrichene Zeit T die Ausgabebedingung für jede Einheit der Sprachdaten erfüllt oder nicht, was die Beurteilung der Frage umfasst, ob die verstrichene Zeit T "0" ist oder nicht.

## Revendications

1. Un dispositif de jeu (10), comprenant :
un moyen de stockage de données vocales (46) pour mémoriser des données vocales ;
un moyen de stockage de données vocales de référence pour mémoriser des données vocales de référence en association avec les données vocales ;
un moyen de stockage d'information indiquant des données vocales déjà sorties (48) dans un moyen de stockage ; et
un moyen de commande de sortie (52) pour commander la sortie des données vocales en fonction d'un résultat de test sur la question de savoir si les données vocales de référence associées aux données vocales ont déjà été sorties ou non en utilisant une section de test (54) et une section de sortie vocale (56), sachant que la section de test (54) peut être mise en oeuvre pour :
sélectionner un groupe vocal X pour lequel une condition de sélection est satisfaite à partir de groupes vocales stockés dans un champ de groupes d'une table de données vocales, sachant que la condition de sélection est constituée d'un type d'action d'un objet joueur (34) d'une équipe susceptible à l'opération (*operation subject team*), et d'un nom de région, et sachant que la condition de sélection est satisfaite si l'objet joueur (34) de l'équipe susceptible à l'opération effectue une action qui forme la condition de sélection dans une région qui forme la même condition de sélection et
tester si la condition de sortie pour chaque élément *(item)* des données vocales appartenant au groupe vocal X est satisfaite en acquérant le temps écoulé T depuis que les données vocales de référence des données vocales appartenant aux groupe vocal X ont été sorties en dernier, en se fondant sur le contenu de mémoire du moyen de stockage d'information indiquant les données vocales déjà sorties (48), sachant que, si les données vocales de référence n'ont pas encore été sorties, en fixant une valeur du temps écoulé T à « 0 » et en testant si le temps écoulé T satisfait la condition de sortie pour chaque élément des données vocales ou non, y compris en testant si le temps écoulé T est 0.

2. Un dispositif de jeu d'après la revendication 1, pour lequel :
le moyen de stockage de données vocales (46) mémorise des premières données vocales et des deuxièmes données vocales ;
le moyen de stockage de données vocales de référence mémorise des données vocales de référence en association avec les premières données vocales ou avec les deuxièmes données vocales ;
le moyen de commande de sortie (52) sort les premières données vocales si un résultat de test sur la question de savoir si les données vocales de référence associées aux premières données vocales ou bien aux deuxièmes données vocales ont été déjà sorties ou non, est un premier résultat de test ; et
le moyen de commande de sortie (52) sort les deuxièmes données vocales au lieu des premières données vocales si le résultat de test est un deuxième résultat de test.

3. Un dispositif de jeu d'après la revendication 1, pour lequel :
le moyen de stockage de données vocales (46) mémorise des premières données vocales et des deuxièmes données vocales ;
le moyen de stockage de données vocales de référence mémorise des données vocales de référence en association avec les premières données vocales ou avec les deuxièmes données vocales ;
le moyen de commande de sortie (52) sort les premières données vocales si un résultat de test sur la question de savoir si les données vocales de référence associées aux premières données vocales ou bien aux deuxièmes données vocales ont été déjà sorties ou non, est un premier résultat de test ; et
le moyen de commande de sortie (52) sort les premières données vocales et les deuxièmes données vocales si le résultat de test est un deuxième résultat de test.

4. Un dispositif de jeu d'après la revendication 1, comprenant en outre un moyen de commande d'affichage pour afficher un état de l'espace de jeu sur un écran de jeu, dans lequel :
le moyen de stockage de données vocales de référence comprend :
un moyen de stockage de région de référence à l'intérieur de l'espace de jeu en association avec les données vocales de référence ; et
un moyen de stockage de la région de référence en association avec les données vocales ; et
un moyen de commande de sortie (52) commande la sortie des données vocales en fonction d'un résultat de test sur la question de savoir si les données vocales de référence associées à la région de référence associée aux données vocales ont été déjà sorties ou non.

5. Un dispositif de jeu d'après la revendication 2, comprenant en outre un moyen de stockage de condition pour mémoriser une condition concernant un comptage de sortie des données vocales de référence, sachant que :
le moyen de commande de sortie (52) comprend un moyen d'acquisition de comptage de sortie pour acquérir le comptage de sortie des données vocales de référence ; et
au cas où le résultat de test est le deuxième résultat de test, et donc que les données vocales de référence ont été déjà sorties, si le comptage de sortie acquis par le moyen d'acquisition de comptage de sortie satisfait la condition, le moyen de commande de sortie (52) sort les deuxièmes données vocales.

6. Un dispositif de jeu d'après la revendication 3, comprenant en outre un moyen de stockage de condition pour mémoriser une condition concernant un comptage de sortie des données vocales de référence, sachant que :
le moyen de commande de sortie (52) comprend un moyen d'acquisition de comptage de sortie pour acquérir le comptage de sortie des données vocales de référence ; et
au cas où le résultat de test est le deuxième résultat de test, et donc que les données vocales de référence ont été déjà sorties, si le comptage de sortie acquis par le moyen d'acquisition de comptage de sortie satisfait la condition, le moyen de commande de sortie (52) sort les deuxièmes données vocales.

7. Un procédé de commande de dispositif de jeu, comprenant :
une étape de lecture du contenu de mémoire du moyen de stockage de données vocales (46) mémorisant des données vocales ;
une étape de lecture du contenu de mémoire du moyen de stockage de données vocales de référence mémorisant des données vocales de référence en association avec les données vocales ;
une étape de stockage d'information indiquant des données vocales déjà sorties dans un moyen de stockage (48); et
une étape de commande de sortie pour commander la sortie des données vocales en fonction d'un résultat de test sur la question de savoir si les données vocales de référence associées aux données vocales ont déjà été sorties ou non en utilisant une section de test (54) et une section de sortie vocale (56), sachant que la section de test (54) effectue les étapes consistant à :
sélectionner un groupe vocal X pour lequel une condition de sélection est satisfaite à partir de groupes vocales stockés dans un champ de groupes d'une table de données vocales, sachant que la condition de sélection est constituée d'un type d'action d'un objet joueur (34) d'une équipe susceptible à l'opération, et d'un nom de région, et sachant que la condition de sélection est satisfaite si l'objet joueur (34) de l'équipe susceptible à l'opération effectue une action qui forme la condition de sélection dans une région qui forme la même condition de sélection et
tester si la condition de sortie pour chaque élément des données vocales appartenant au groupe vocal X est satisfaite en acquérant le temps écoulé T depuis que les données vocales de référence des données vocales appartenant aux groupe vocal X ont été sorties en dernier, en se fondant sur le contenu de mémoire du moyen de stockage d'information indiquant les données vocales déjà sorties (48), sachant que, si les données vocales de référence n'ont pas encore été sorties, en fixant une valeur du temps écoulé T à « 0 » et en testant si le temps écoulé T satisfait la condition de sortie pour chaque élément des données vocales ou non, y compris en testant si le temps écoulé T est 0.

8. Un programme pour amener un ordinateur à fonctionner comme dispositif de jeu,
le programme amenant en outre l'ordinateur à fonctionner en tant que :
moyen pour lire le contenu de mémoire du moyen de stockage de données vocales (46) mémorisant des données vocales ;
moyen pour lire le contenu de mémoire du moyen de stockage de données vocales de référence mémorisant des données vocales de référence en association avec les données vocales ;
moyen pour stocker de l'information indiquant des données vocales déjà sorties dans un moyen de stockage (48); et
moyen de commande de sortie (52) pour commander la sortie des données vocales en fonction d'un résultat de test sur la question de savoir si les données vocales de référence associées aux données vocales ont déjà été sorties ou non en utilisant une section de test (54) et une section de sortie vocale (56), sachant que la section de test (54) peut être mise en oeuvre pour:
sélectionner un groupe vocal X pour lequel une condition de sélection est satisfaite à partir de groupes vocales stockés dans un champ de groupes d'une table de données vocales, sachant que la condition de sélection est constituée d'un type d'action d'un objet joueur (34) d'une équipe susceptible à l'opération, et d'un nom de région, et sachant que la condition de sélection est satisfaite si l'objet joueur (34) de l'équipe susceptible à l'opération effectue une action qui forme la condition de sélection dans une région qui forme la même condition de sélection et
tester si la condition de sortie pour chaque élément des données vocales appartenant au groupe vocal X est satisfaite en acquérant le temps écoulé T depuis que les données vocales de référence des données vocales appartenant aux groupe vocal X ont été sorties en dernier, en se fondant sur le contenu de mémoire du moyen de stockage d'information indiquant les données vocales déjà sorties (48), sachant que, si les données vocales de référence n'ont pas encore été sorties, en fixant une valeur du temps écoulé T à « 0 » et en testant si le temps écoulé T satisfait la condition de sortie pour chaque élément des données vocales ou non, y compris en testant si le temps écoulé T est 0.

9. Un support de stockage d'information lisible par ordinateur sur lequel est stocké un programme pour amener un ordinateur à fonctionner comme dispositif de jeu,
le programme amenant en outre l'ordinateur à fonctionner en tant que :
moyen pour lire le contenu de mémoire du moyen de stockage de données vocales (46) mémorisant des données vocales ;
moyen pour lire le contenu de mémoire du moyen de stockage de données vocales de référence mémorisant des données vocales de référence en association avec les données vocales ;
moyen pour stocker de l'information indiquant des données vocales déjà sorties dans un moyen de stockage (48); et
moyen de commande de sortie (52) pour commander la sortie des données vocales en fonction d'un résultat de test sur la question de savoir si les données vocales de référence associées aux données vocales ont déjà été sorties ou non en utilisant une section de test (54) et une section de sortie vocale (56), sachant que la section de test (54) peut être mise en oeuvre pour:
sélectionner un groupe vocal X pour lequel une condition de sélection est satisfaite à partir de groupes vocales stockés dans un champ de groupes d'une table de données vocales, sachant que la condition de sélection est constituée d'un type d'action d'un objet joueur (34) d'une équipe susceptible à l'opération, et d'un nom de région, et sachant que la condition de sélection est satisfaite si l'objet joueur (34) de l'équipe susceptible à l'opération effectue une action qui forme la condition de sélection dans une région qui forme la même condition de sélection et
tester si la condition de sortie pour chaque élément des données vocales appartenant au groupe vocal X est satisfaite en acquérant le temps écoulé T depuis que les données vocales de référence des données vocales appartenant aux groupe vocal X ont été sorties en dernier, en se fondant sur le contenu de mémoire du moyen de stockage d'information indiquant les données vocales déjà sorties (48), sachant que, si les données vocales de référence n'ont pas encore été sorties, en fixant une valeur du temps écoulé T à « 0 » et en testant si le temps écoulé T satisfait la condition de sortie pour chaque élément des données vocales ou non, y compris en testant si le temps écoulé T est 0.
